(19) Europäisches Patentamt

European Patent Office

Office européen des brevets

(11) **EP 0 942 351 B1**

(12) **EUROPEAN PATENT SPECIFICATION**

(45) Date of publication and mention
of the grant of the patent:
**02.04.2003 Bulletin 2003/14**

(51) Int Cl.⁷: **G06F 3/033**, G06F 3/03,
G06K 11/14

(21) Application number: **98944227.2**

(22) Date of filing: **25.09.1998**

(86) International application number:
**PCT/JP98/04288**

(87) International publication number:
**WO 99/017188 (08.04.1999 Gazette 1999/14)**

(54) **GLASS SUBSTRATE FOR TOUCH SENSOR AND TOUCH PANEL**

GLASTRÄGER FÜR BERÜHRUNGSSENSOR UND BERÜHRUNGSEMPFINDLICHE TAFEL

SUBSTRAT DE VERRE POUR CAPTEUR ET ECRAN TACTILES

(84) Designated Contracting States:
**AT BE CH DE DK ES FI FR GB GR IE IT LI LU MC NL PT SE**

(30) Priority: **01.10.1997 JP 26835497**

(43) Date of publication of application:
**15.09.1999 Bulletin 1999/37**

(73) Proprietor: **Touch Panel Systems Corporation
Tokyo 100-6077 (JP)**

(72) Inventor: **TSUMURA, Masahiro
Sakai-shi, Osaka 592-8344 (JP)**

(74) Representative: **Jay, Anthony William
Tyco Electronics UK Limited
European Patent Department
Faraday Road
Dorcan Swindon Wiltshire SN3 5HH (GB)**

(56) References cited:
JP-A- 5 266 298          JP-A- 8 185 560
JP-A- 8 305 482          JP-A- 9 190 254

• "PROTECTION FROM MOVING LIQUIDS FOR ACOUSTIC WAVE TOUCHSCREENS" RESEARCH DISCLOSURE, no. 382, 1 February 1996 (1996-02-01), page 118 XP000553618 ISSN: 0374-4353

## Description

### TECHNICAL FIELD

The present invention relates to a glass substrate for a touch sensor which is advantageous for output of the coordinate data on a touch position on the panel touched by a finger or the like, and to a touch panel provided with the glass substrate.

### BACKGROUND ART

Recently, a touch panel is utilized as an input device, applicable in various fields, in combination with a display device such as a cathode ray tube (CRT), a liquid crystal display (LCD) and a plasma display panel (PDP). However, a touch panel such as an ATM system in a bank on which many and unspecified persons touch may give unpleasantness to users with a malodor or have a possibility of food poisoning caused by bacteria and microorganisms multiplied thereon. Therefore, the periodic cleaning and sterilization are required.

However, the cleaning or sterilization process is troublesome and therefore it is desirable to prevent the multiplication of bacteria and microorganisms (e.g. mold) effectively for a long period of time without cleaning operations.

As a touch panel, there are known touch panels for detection of the coordinate data on a touching position (a coordinate input position) on a glass substrate, such as (1) a touch panel in which a resistance layer is formed on the glass substrate and (2) a touch panel utilizing surface acoustic waves without a resistance layer. Antimicrobiality is required of both touch panels. Especially, when the latter is afforded antimicrobiality by coating an organic resin, the attenuation or damping ratio of acoustic waves (e.g. ultrasonic surface acoustic waves) becomes larger. As a result, the intensity of detected signals becomes lower, so that the touch panel does not operate properly. Moreover, since large-sized touch panels have a longer distance for the propagation of acoustic waves, the attenuation or damping ratio becomes larger. Thus, it is difficult to provide an ideal panel for a large-sized display device.

Accordingly, an object of the present invention is to provide an antimicrobial glass substrate for a touch sensor capable of preventing the multiplication of bacteria or microorganisms, and an antimicrobial touch panel provided with the same.

Another object of the present invention is to provide a glass substrate for a touch sensor capable of inhibiting an attenuation or damping and of detecting the coordinate data on a touch position precisely even if acoustic waves are utilized, and a touch panel provided with the same.

A further object of the present invention is to provide a glass substrate for a touch sensor able to maintain high antimicrobiality for a long period of time, and a touch panel provided with the same. Acoustic wave touch screens are disclosed in JP-A-8305482. Anti-microbial substrates for touch sensors are described in JP-A-8185560 and JP-1-5266298.

### DISCLOSURE OF THE INVENTION

The invention is set forth in claim 1. Particular embodiments are set forth in dependent claims 2 to 6.

The inventor of the present invention has made intensive researches to achieve the above objects, and found that, in a touch panel provided with a glass substrate as a means for obtaining the coordinate data on a touching position and capable of propagating acoustic waves, affording the surface of the glass substrate antimicrobiality can propagate the acoustic waves and can enlarge the size of glass substrate without increasing the attenuation or damping ratio considerably. The present invention has been accomplished on the basis of the above findings.

Thus, according to the present invention, for detecting the coordinate data on a touching position, antimicrobiality is given or imparted onto the surface of a glass substrate for a touch sensor. The glass substrate is advantageous not only as a substrate for obtaining the coordinate data on a touching position with use of acoustic waves, but also as a substrate for obtaining the coordinate data on a touching position with propagating at least one of the waves selected from Rayleigh wave and Love wave. Moreover, when a pair of transducers capable of transmitting and receiving Rayleigh waves are affixed or adhered to the glass substrate and the distance between the signal transmit-receive transducers is changed, the attenuation or damping ratio (coefficient) of the glass substrate is usually not more than 1.5 dB/cm as measured by the slope of a plot of amplitude (the obtained receiving voltage) versus distance for a signal through the transducers.

The antimicrobiality described above can be provided by various techniques, for example, by forming a coating layer or hard or cured layer comprising an antimicrobial agent (e.g. inorganic antimicrobial agents comprising a silver component or the like) and a silicon-containing binder (e.g. silazane compounds, hydrolytic-condensable silicone compounds or precondensed products thereof) on the surface of the glass substrate.

The present invention also includes a touch panel provided with the above antimicrobiality-afforded substrate for a touch sensor.

### BRIEF DESCRIPTION OF THE DRAWINGS

Figure 1 is a schematic plan view showing an example of a touch panel of the present invention.

Figure 2 is a schematic sectional view showing the substrate in Figure 1.

Figure 3 is a wave form chart showing an example of a received signal.

Figure 4 is a schematic view for explaining the measuring method of the attenuation or damping ratio.

BEST MODE FOR CARRING OUT THE INVENITON

Characteristics of the substrate for a touch sensor and the touch panel having the same of the present invention reside in that antimicrobiality is given to the glass substrate, being useful in vies of signal properties, optical properties and intensity, to be touched for input, and the glass substrate is advantageous.

Antimicrobiality can be given or imparted to the glass substrate by forming an antimicrobial layer on the substrate directly or indirectly (via an underlying layer). The antimicrobial layer can be formed by applying a coating composition containing at least one antimicrobial agent and a binder, and drying or hardening (or curing) the coated layer.

Any antimicrobial agent may be employed and is preferably an antimicrobial agent with high heat resistance such as an inorganic antimicrobial agent, to retain antimicrobiality even after a high-temperature treating process for forming a hard or cured layer. Moreover, the antimicrobial agent includes an antimicrobiality-producing component (for example, photo-active components such as titanium oxide components expressing antimicrobiality emerges by irradiation of light such as ultraviolet rays), besides a component having an antimicrobial activity (an antimicrobial metal component such as silver and copper). The preferable inorganic antimicrobial agent includes copper-containing antimicrobial agents comprising a copper component, silver-containing antimicrobial agents comprising a silver component or the like, and the metal component having an antimicrobial activity (e.g. copper or silver components) may be supported on a carrier (e.g. inorganic carriers such as zeolites, silica, silica gels, alumina, zirconia, zirconium phosphates). Particularly preferred inorganic antimicrobial agents are silver-containing inorganic antimicrobial agents, and are available from, for example, Toa gosei Co., Ltd., under the tradename "Novalon." which comprises a carrier (a zirconium phosphate) and silver supported thereon

It is advantageous that the adhesion of the antimicrobial layer to the substrate (specifically, a glass substrate) is high enough not to peel off from the substrate. Moreover, improving scrape or scratch resistance of the coated layer, it is advantageous that the antimicrobial layer is hard. Therefore, when utilizing an acoustic wave, any organic or inorganic binder which can form a hard layer (particularly, binders curable at relatively low temperatures) can be employed provided that the detection accuracy of the coordinate data on a touching position will not be deteriorated. A crosslinkable or curable inorganic binder, specifically a silicon-containing binder, is preferable. As the inorganic binder (e.g. a silicone-series binder), there may be exemplified a product such as silica coat agents under the tradenames "CNG-005" and "CNG-005N" manufactured by Colcort Co.

As the silicon-containing binder, there may be mentioned, for example, silazane compounds having a silazane unit - $(NHSiH_2)$- such as a polysilazane represented by the following formula:

$$H_3Si[NHSiH_2]_nNHSiH_3$$

wherein n represents an integer of 2 or more, and hydrolytic-condensable silicone-series binders (for example, a hydrolytic-condensing organopolysiloxane having a hydrolytic-condensing group such as a hydroxy group, an $C_{1-2}$ alkoxy group etc., or precondensed products thereof). As the silicone-series binder, hydrolytic-condensed products (precondensed products) of an alkyltrialkoxysilane or a 4 functional silicone compound conventionally utilized as hard coat agents are practically employed.

The proportion of the antimicrobial agent (antimicrobial active components) to the binder can be selected from the ranges of, for example, on a solid matter basis, about 0.01/99.99 to 50/50 (weight ratio), preferably 0.05/99.95 to 40/60 (weight ratio), and more preferably 1/99 to 30/70 (weight ratio), and is usually about 0.1/99.9 to 30/70 (weight ratio).

The antimicrobial layer may contain an organic binder such as a thermoplastic resin (e.g. an acrylic resin, a polyester resin, a thermoplastic polyurethane resin) and a thermosetting resin (e.g. a thermosetting acrylic resin, a polyurethane resin, an epoxy resin).

The thickness of the antimicrobial layer can be selected from the ranges that will not adversely affect on the attenuation or damping characteristic of an acoustic wave. Considering that stresses tend to result in defcts (such as a clack), it is preferable that the antimicrobial layer is thin, for example, about 0.1 to 5 μm and more preferably about 0.2 to 3 μm (specifically, 0.3 to 1 μm) in thickness.

A coating composition containing an antimicrobial agent can usually be used in the form of a homogeneous solution or dispersion containing an organic solvent, and may be applied onto a base or substrate by a conventional method (such as a spin coating method, a dipping method, a spray coating method, a casting method or the like). After the application of the coating composition, the coated layer is usually dried or heated for cross-linking or curing.

As described above, the surface of the glass substrate for detecting the coordinate data on a touching position is afforded antimicrobiality. The glass substrate is capable of propagating acoustic waves and useful as a substrate for obtaining the coordinate data on a touching position with utilizing an acoustic wave. As the acoustic wave, surface acoustic waves [e.g., ultrasonic surface acoustic waves such as Rayleigh wave and Love wave; plate waves such as Lamb wave; and SH waves (shear horizontal wave) such as Horizontally Polarized Shear Wave] can be utilized.

The intensity of received signals is required to be high to realize a touch panel with high stability and accuracy, and therefore, it is preferable that the attenuation or damping ratio of an acoustic wave traveling on the panel surface is small. For example, when a pair of transducers capable of transmitting and receiving Rayleigh waves is affixed or adhered to a glass substrate and the distance between the signal transmit-receive transducers is changed, the attenuation and damping ratio is usually not more than 1.5 dB/cm (preferably, not more than 1.0 dB/cm) as measured by the slope of a plot of amplitude versus distance for a signal through the pair of transducers. A measuring method of the attenuation or damping ratio will be fully explained later.

An antimicrobial glass substrate for a touch panel may be in the form of a conventional curved panel such as a cathode ray tube, and it is advantageous to use a glass substrate in the form of a flat panel (preferably, an isotropic flat panel) or a low-curvature panel (preferably an isotropic low-curvature panel). A panel with a flat or of low-curvature surface can be advantageously applied to a liquid crystal display device, a plasma display device or the like.

In the antimicrobial glass substrate, antimicrobiality may be given to the entire surface of the glass substrate, and it is enough to give antimicrobiality to at least a display region(an image display region) whereon data and images are displayed.

In order to display the data clearly by a display unit assembled combinatrially with a touch panel, an antimicrobial glass substrate preferably has a transmittance nearly equal to that of glass (for example, a transmittance of not less than 90% in the visible ray region). Where necessary, the antimicrobial layer may be imparted water repellency, stain resistivity, antistaticity etc. Moreover, an anti-reflection treatment (AR coat) or a non-glare treatment can be performed on the antimicrobial glass substrate to make the displayed data easy to read. The non-glare treatment can easily be carried out by adding a filler to the binder.

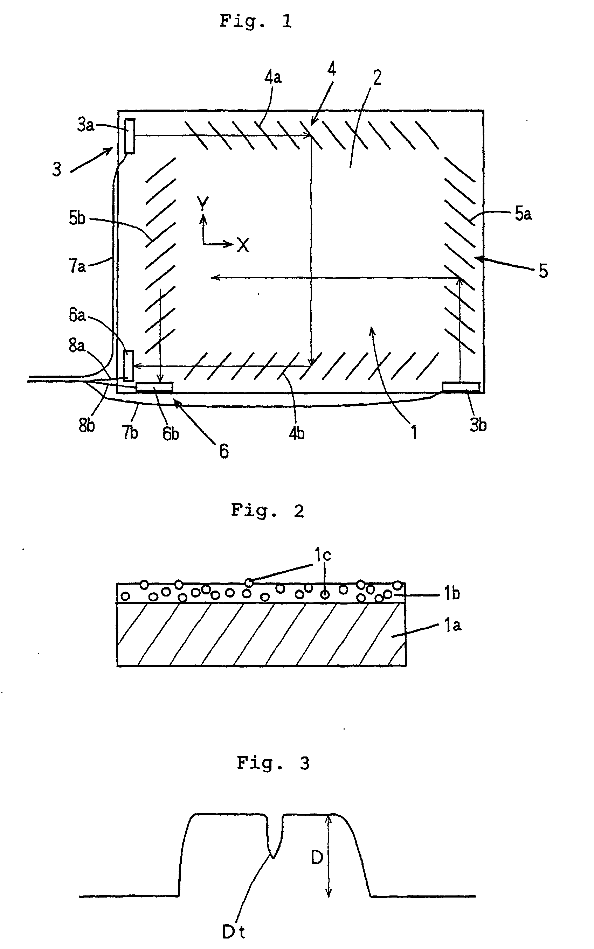

Figure 1 is a schematic plan view showing an example of the touch panel of the present invention, Figure 2 is a schematic sectional view showing the substrate in Figure 1, and Figure 3 is a wave form chart showing an example of the received signal.

The touch panel (or the touch sensor) shown in Figure 1 comprises an antimicrobial glass substrate 1, an acoustic wave transmitting means (elements) 3, acoustic wave reflecting arrays 4 and 5, an acoustic wave receiving means (elements) 6, and cables 7 and 8 for transmitting and receiving signals, etc. Moreover, as shown in Figure 2, the antimicrobial glass substrate 1 for the touch panel comprises a glass substrate 1a and an antimicrobial layer 1b containing an antimicrobial agent 1c. In the antimicrobial layer 1b, the antimicrobial agent 1c may be dispersed overall the surface.

In more detail, the touch panel (or the touch sensor) comprises the glass substrate 1 as a propagation medium having a surface which is touchable and capable of propagating acoustic waves and which have a simmetrical display region (an image display region) 2 symmetrical in the X-axial and Y-axial directions, and transmitting means 3 for transmitting surface acoustic waves in the directions of the X-axis and the Y-axis of the antimicrobial glass substrate. Each of these transmitting means 3 comprises a transmitting element (ultrasonic transmitting elements directed or faced to the directions of the X-axis and the Y-axis and composed of ceramics piezoelectric vibrators) disposed on a predetermined position on the antimicrobial glass substrate 1 (for example, on the side or the bottom sides of adjacent or opposite corners of the glass substrate) , and a conversion medium for converting ultrasonic waves from the transmitting elements into surface waves at a transmission region of the surface of the antimicrobial glass substrate 1 (e.g. plastic wedge signal transmitting elements 3a and 3b in this embodiment).

The surface acoustic waves from the transmitting means for the directions of the X-axis and the Y-axis are propagated respectively in the Y-axis and the X-axis directions over the whole display region 2 by a reflecting means comprised of first reflecting arrays (first reflecting means) 4a and 4b formed on the both Y-axial sides and second reflecting arrays (second reflecting means) 5a and 5b formed on both X-axial sides. Namely, the acoustic wave reflecting arrays 4 and 5 are disposed in order to evenly distribute acoustic waves all over the surface of the glass substrate. In this embodiment, the acoustic wave reflecting arrays 4 and 5 are formed by a screen printing method or the like.

The surface acoustic waves propagated through the antimicrobial glass substrate 1 are focused or converged in the X-axis and the Y-axis directions and received by the receiving means 6.

Each of these receiving means 6 comprises members similar to those of the transmitting means. Namely, each receiving means comprises a conversion medium (plastic wedge signal transmitting elements 6a and 6b in this embodiment) for converting surface waves into bulk waves or other waves and disposed in a receiving area of the glass substrate 1 (in this embodiment, in the corner opposite to the transmitting element), and a receiving element for receiving the converted signals (ultrasonic wave receiving elements in the X-axis and the Y-axis directions, each comprising a ceramics piezoelectric vibrator) and disposed on a suitable position (e.g. the side or bottom of the glass substrate 1 corresponding to the signal transmitting elements 6a and 6b). Namely, each of the acoustic wave transmitting elements 3 and the acoustic wave receiving elements 6 is composed of a combination of the same elements (a combination of an oscillation or vibration element of ceramics or the like and a plastic wedge signal transmitting element).

Moreover, signal cables 7a and 7b are connected to the transmitting elements, and signal cables 8a and 8b are connected to the receiving elements.

In this device, when signals with a constant peak intensity is intermittently transmitted (sent) from an acoustic wave transmitting element, ultrasonic surface acoustic waves are reflected by the reflecting arrays 4a and 5a, propagated through the surface of the glass substrate 1, and reflected by the reflecting arrays 4b and 5b, and the reflected waves are received by the receiving elements. The received signals are sent to a signal-processing controller via signal cables 7a to 8b, where the controller recognizes the received signals and detects the intensity. The display device displays predetermined data in response to the detected signal.

Using an apparatus or a device in which the touch panel (or the touch sensor) is assembled with a controller manufactured by Touch Panel Systems Co., Ltd., the detection of the coordinate data on a touch position was performed by using burst transmission signals (frequency: 5.53 MHz, amplitude: 50 V, amplitude voltage from peak to peak). As shown in Figure 3, the detected touching position signal (the detected wave form) relative to the received signal intensity D shows a sharp trough or valley Dt, and the touching position was clearly recognized.

To the display device or unit (a coordinate input device), sound generating means or vocal reporting means for generating sound or voice in response to a touch on the surface of the glass substrate, display means for displaying a touching position, controlling means for controlling an image on the display region in response to a touching position (e.g. switching or blanking means of a display screen), controlling means for other driving devices, or the like may be connected.

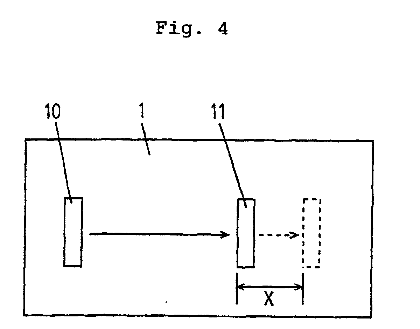

The attenuation or damping ratio of the antimicrobial glass substrate can be measured according to the following manner. A pair of transducers capable of transmitting and receiving Rayleigh waves are affixed onto the substrate and the distance between the signal transmit-receive transducers is changed or varied. The attenuation or damping ratio of the antimicrobial glass substrate is measured by plotting the relationship between the obtained receiving voltage (amplitude) and the distance. Figure 4 is a schematic view for explaining a measuring method of the attenuation or damping ratio.

In measurement of the attenuation or damping ratio, the Rayleigh wave transmitting element 10 is fixed on the substrate 1, and the intensity of the received signal V1 (a voltage from peak to peak) of the Rayleigh wave receiving element 11 is measured. Subsequently, the Rayleigh wave receiving element 11 is moved X cm in the direction opposite to the Rayleigh wave transmitting element 10, and the received signal voltage V2 (a voltage from peak to peak) is measured. After repeating such operations several times, the relation between the received signal voltage V and the distance X is plotted semi-logarithmically, and the attenuation or damping ratio is calculated on the basis of a slope log (V1/V2)/X with the following formula.

Attenuation or damping ratio (dB/cm)

$$= 20 \times \log (V1/V2)/X$$

The measurement of the attenuation or damping ratio can be carried out with, for example, a signal having a frequency of 5.53 MHz and an amplitude of 50 V.

INDUSTRIAL APPLICABILITY

The present invention provides a glass substrate afforded antimicrobiality, which is capable of preventing the multiplication of bacteria or microorganisms and excellent in sanitation. Moreover, the glass substrate on which an antimicrobial layer is formed using a silicon-containing binder can inhibit an attenuation or damping even when acoustic waves are utilized and detects the coordinate data corresponding to a touching position with high accuracy. Furthermore, an antimicrobial glass substrate employing an inorganic antimicrobial agent maintains high antimicrobiality for a long period of time. Therefore, the touch panel of the present invention is used in various fields as an input device in combination with a display device.

EXAMPLES

Hereinafter, the present invention will be explained in further detail according to the Example and should by no means be construed as defining the scope of the invention.

Example

[The production of an antimicrobial glass substrate]

As a surface acoustic wave mode touch panel, a touch panel was produced with the use of a float soda glass substrate (width: 318 mm, length: 245 mm, thickness: 3 mm) in the following manner.

A coating composition (a dispersion in which an antimicrobial agent is dispersed) comprising 1.0 weight% of an inorganic silver-series ceramics antimicrobial agent (Novalon AG 300, Toa gosei Co., Ltd.), 5 weight% of a polysilazane ("Polysilazane series" represented by -SiH$_2$NH-, Tonen Corporation) and 94.0 weight% of xylene was applied on the glass substrate by the dipping method so as to form a coating layer having an average thickness of about 0.5 µm, and the coating layer was cured by heating at a temperature of 450°C for 1 hour.

[Characteristics of the antimicrobial glass substrate]

The adhesion strength of the hard coat layer (the antimicrobial layer) to the glass substrate was examined by the tape peeling test. The adhesion was high and the coat layer was not peeled off from the substrate. Moreover, the pencil hardness of the hard coat layer (the antimicrobial layer) was 9H or above, and thus the coating layer had a high hardness.

The visible ray transmittance of the obtained antimicrobial glass substrate was measured with a measuring apparatus (haze computer HGM-2D manufactured by Suga Testing Apparatus Co., Ltd.), and a transmittance of as high as 91.5% was obtained. Moreover, the attenuation or damping ratio of the antimicrobial glass substrate was measured using Rayleigh waves, and the ratio was as low as 1.0 dB/cm.

On the antimicrobial glass substrate, a multiplication experiment of Escherichia coli was performed in accordance with the Film Adhesion Method, the 1995's edition published by Society of Research of Inorganic Antimicrobial Agent. In this method, after the inoculation of a mixture containing Escherichia coli on the surface of a sample antimicrobial glass substrate of 5 x 5 cm, wrap and keep the sample for 24 hours in a desiccator containing water at a temperature of 35°C, and measure the number of the viable bacteria. As a result, no viable bacterium was recognized after the experiment, while the initial number of the viable bacteria was 1.2 x $10^5$, and thus the substrate showed high antimicrobiality of the substrate.

[Touch panel]

A low-melting point glass was screen printed on the antimicrobial glass substrate and baked at a temperature of 450°C for 1 hour to form reflecting arrays. Subsequently, Rayleigh wave transmitting elements and receiving elements were adhered on the glass substrate with an adhesive and connected to signal cables so as to form a panel unit of a touch panel.

The panel unit was connected to a controller (a controller for a surface acoustic wave touch panel 1040 manufactured by Touch Panel Systems Co., Ltd.) to observe operability of the unit, and thus the coordinate data on a touching position was clearly detected. Each signal intensity in the directions of the X-axis (the axis of abscissa) and the Y-axis (the axis of ordinate) was measured, and high signal intensities of 5.0 mV (for the X-axis) and 7.5 mV (for the Y-axis) were obtained.

Comparative Example 1

By use of the same glass substrate without the antimicrobial coat layer, a touch panel was fabricated in the same manner as in Example. As measured in the same manner as described above, the transmittance of the glass substrate without the antimicrobial layer was 91.0%, slightly lower than that of the antimicrobial glass substrate of Example. Moreover, the attenuation or damping ratio of the glass substrate utilizing Rayleigh waves was as good as 0.6 dB/cm.

On the other hand, the multiplication experiment of Escherichia coli was performed on the glass substrate. While the initial number of the viable bacteria was 1.2 x $10^5$, the number of the viable bacteria after the experiment was 1.5 x $10^6$, thus, a slight increase in the number of the viable bacteria was observed. Therefore, this glass substrate proved to have no antimicrobiality.

Subsequently, the observation of the performance of a panel unit fabricated in the same manner as in Example proved the clear detection of the coordinate data on a touching position, and the signal intensity of the X-axis (the axis of abscissa) was 6.0 mV and that of the Y-axis (the axis of ordinate) was 8.5 mV.

Comparative Example 2

Without using an antimicrobial agent, a hard coat layer was formed by applying a coating composition composed of 5 weight% of a polysilazane ("Polysilazane series" represented by -SiH$_2$NH- manufactured by Tonen Corporation) and 95 weight% of xylene onto the glass substrate of Example 1 as the same manner as in Example.

The adhesion of the hard coat layer was examined by the tape peeling test and proved to be good since no separation was caused. Moreover, the pencil hardness was 9H or above, and a high visible ray transmittance of 92.2% was detected. Furthermore, the attenuation or damping ratio of the substrate measured with Rayleigh waves was 1.0 dB/cm.

On the other hand, in the multiplication experiment of Escherichia coli, while the initial number of the viable bacteria was 1.2 x $10^5$, the number of the viable bacteria after the experiment was 1.5 x $10^6$, showing no antimicrobiality.

Comparative Example 3

Without the antimicrobial treatment, an ultraviolet ray curable resin was applied onto the same glass substrate as of Comparative Example 1 and was irradiated with an ultraviolet ray to form a hard coat layer.

The adhesion of the hard coat layer was examined by the tape peeling test. The coat layer peeled off from the substrate and proved to be inferior in adhesion. Moreover, the attenuation or damping ratio of the antimicrobial glass substrate measured with Rayleigh waves was considerably higher than 2.0 dB/cm.

Moreover, the multiplication experiment of Escherichia coli was carried out and showed the number of the viable bacteria after the experiment being 1.5 x $10^6$, while the initial number of the viable bacteria being 1.2 x $10^5$. Thus, no antimicrobiality was observed.

Furthermore, when the performance of the substrate as a touch panel was examined, no coordinate data on a touching position was detected, and the touch panel failed to obtain signals from the X-axis (the axis of abscissa) and the Y-axis (the axis of ordinate).

## Claims

1. A glass substrate for a touch sensor, wherein the surface of the glass substrate for detecting the coordinate data on a touching position is afforded or given antimicrobiality by an antimicrobial agent comprising a silver component, or by a coating layer formed on the glass substrate comprising the antimicrobial agent and a silicon-containing binder.

2. A glass substrate for a touch sensor according to claim 1, which is a substrate for obtaining the coordinate data on a touch position by utilizing acoustic waves.

3. A glass substrate for a touch sensor according to claim 1, which is a substrate capable of propagating a surface acoustic wave selected from Rayleigh wave and Love wave, and for obtaining the coordinate data on a touch position.

4. A glass substrate for a touch sensor according to claim 1, when a pair of transducers capable of transmitting and receiving Rayleigh waves is affixed or adhered to a glass substrate and the distance between the signal transmit-receive transducers is changed, the attenuation and damping ratio is not more than 1.5 dB/cm as measured by the slope of a plot of amplitude versus distance for a signal through the pair of transducers.

5. A glass substrate for a touch sensor according to claim 1, wherein a hard layer is formed on the glass substrate and said hard layer comprises an inorganic antimicrobial agent, at least one member selected from silazane compounds, and hydrolytic-condensing silicone compounds or precondensed products thereof.

6. A touch panel provided with a glass substrate recited in any of claims 1 to 5.

## Patentansprüche

1. Glassubstrat für einen Berührungssensor, wobei der Oberfläche des Glassubstrats zum Feststellen der Koordinaten einer Berührungsposition durch ein antimikrobielles Mittel, das eine Silberkomponente aufweist, oder durch eine auf dem Glassubstrat aufgebrachte Beschichtung, die das antimikrobielle Mittel und ein siliciumhaltiges Bindemittel aufweist, eine antimikrobielle Wirkung gewährt oder verliehen wird.

2. Glassubstrat für einen Berührungssensor nach Anspruch 1, das ein Substrat ist, um die Koordinaten einer Berührungsposition unter Ausnutzung von Schallwellen zu erhalten.

3. Glassubstrat für einen Berührungssensor nach Anspruch 1, das ein Substrat ist, das fähig ist, für die Ausbreitung einer akustischen Oberflächenwelle, die aus einer Rayleigh-Welle und einer Love-Welle ausgewählt ist, zu sorgen, um die Koordinaten einer Berührungsposition zu erhalten.

4. Glassubstrat für einen Berührungssensor nach Anspruch 1, wobei dann, wenn ein Paar von Wandlern, die Rayleigh-Wellen übertragen und empfangen können, an einem Glassubstrat angebracht ist oder daran haftet und der Abstand zwischen den das Signal übertragenden/empfangenden Wandlern geändert wird, das Abschwächungs- und Dämpfungsverhältnis für ein Signal durch dieses Paar von Wandlern nicht mehr als 1,5 dB/cm beträgt, und zwar gemessen mit der Neigung der Kurve der Amplitude gegenüber dem Abstand.

5. Glassubstrat für einen Berührungssensor nach Anspruch 1, wobei auf dem Glassubstrat eine harte Schicht ausgebildet ist und wobei diese harte Schicht ein anorganisches antimikrobielles Mittel und mindestens eine Komponente aufweist, die aus Silazanverbindungen und hydrolytisch kondensierenden Siliconverbindungen oder bereits kondensierten Produkten davon ausgewählt ist.

6. Sensorbildschirm, der mit einem Glassubstrat nach einem der Ansprüche 1 bis 5 ausgestattet ist.

## Revendications

1. Substrat de verre pour capteur tactile, dans lequel la surface du substrat de verre pour détecter les données de coordonnées sur une position de toucher se voit conférer ou donner des propriétés antimicrobiennes par un agent antimicrobien comprenant un composant d'argent, ou par une couche de revêtement formée sur le substrat de verre comprenant l'agent antimicrobien et un liant contenant du silicium.

**2.** Substrat de verre pour capteur tactile selon la revendication 1, qui est un substrat pour obtenir les données de coordonnées sur une position de toucher en utilisant des ondes acoustiques.

**3.** Substrat de verre pour capteur tactile selon la revendication 1, qui est un substrat capable de propager une onde acoustique de surface sélectionnée entre l'onde de Rayleigh et l'onde de Love, et pour obtenir les données de coordonnées sur une position de toucher.

**4.** Substrat de verre pour capteur tactile selon la revendication 1, dans lequel, lorsqu'une paire de transducteurs capables d'émettre et de recevoir des ondes de Rayleigh est fixée ou collée sur un substrat de verre et que la distance entre les transducteurs d'émission / de réception de signaux est modifiée, le taux d'affaiblissement et d'amortissement ne dépasse pas 1,5 dB/cm, tel que mesuré par la pente d'un relevé de l'amplitude en fonction de la distance pour un signal passant par la paire de transducteurs.

**5.** Substrat de verre pour capteur tactile selon la revendication 1, dans lequel une couche dure est formée sur le substrat de verre et ladite couche dure comprend un agent antimicrobien inorganique, au moins un élément sélectionné dans les composés de silazane, et des composés de silicone condensables en présence d'eau ou des produits précondensés de ceux-ci.

**6.** Ecran tactile muni d'un substrat de verre décrit dans l'une quelconque des revendications 1 à 5.

EP 0 942 351 B1

Fig. 1

Fig. 2

Fig. 3

9

Fig. 4